# EUROPÄISCHE PATENTSCHRIFT

(11) **EP 0 972 291 B1**
(45) Veröffentlichungstag und Bekanntmachung des Hinweises auf die Patenterteilung: **13.06.2001**
(21) Anmeldenummer: 98912455.7
(22) Anmeldetag: 06.03.1998
(51) Int. Cl.: H01F 38/08, H01F 27/28

(54) **TRANSFORMATOR**
TRANSFORMER
TRANSFORMATEUR

(30) Priorität: 02.04.1997 DE 29705789 U
(43) Veröffentlichungstag der Anmeldung: 19.01.2000
(73) Patentinhaber: EXPERT Maschinenbau GmbH, D-64653 Lorsch (DE)
(72) Erfinder: BRINCKMANN, Rainer, D-64653 Lorsch (DE); OTTO, Steffen, D-64832 Babenhausen (DE)
(74) Vertreter: Helber, Friedrich G., Dipl.-Ing.
(86) Internationale Anmeldenummer: EP9801328
(87) Internationale Veröffentlichungsnummer: WO9844519

(56) Entgegenhaltungen:
- EP-A- 0 199 456
- DE-A- 2 907 883
- DE-U- 9 115 298
- GB-A- 790 721
- GB-A- 977 993
- US-A- 3 210 706
- US-A- 3 826 967
- US-A- 4 496 821

## Beschreibung

Die Erfindung betrifft einen Transformator hoher Leistung bei mittleren Frequenzen insbesondere zur Verwendung als Schweißtransformator für die Widerstandsschweißung mit jeweils wenigstens einer von einem Schenkel eines Transformator-Kerns durchsetzten Primärwicklung und einer Sekundärwicklung, die als konzentrisch übereinanderliegende Zylinderwicklungen ausgebildet sind.

Die Windungen der Primärwicklung(en) sind von einer Vielzahl von spiralartig übereinandergewickelten Lagen eines elektrisch leitenden metallischen Bandmaterials relativ geringer Dicke und die Windungen der Sekundärwicklung von einer dem gewünschten Untersetzungsverhältnis von Primär- zu Sekundärspannung entsprechend gewählten geringeren Anzahl von Lagen eines übereinandergewickelten elektrisch leitenden metallischen Bandmaterials größerer Dicke gebildet. Die rechtwinklig zur Längsrichtung gemessene Breite der Wicklungs-Lagen der Bandmaterialien ist im wesentlichen gleich oder nur geringfügig kleiner als die Länge des die Wicklungen durchsetzenden Schenkels des Transformator-Kerns, und die sekundärseitigen Anschlußleitungen sind an den stirnflächenseitigen Rändern der Windungen des Bandmaterials der Sekundärspule angeschlossen.

Ein derartiger Transformator ist aus DE-A-2 549 327 bekannt.

Die Verbindung von Werkstücken aus Metallblech miteinander erfolgt heute in der Regel durch Widerstandsschweißung, wobei in der Großserienfertigung bevorzugt Schweißroboter eingesetzt werden, die am freien Ende eines in praktisch beliebige Arbeitsstellungen bringbaren Arbeitsarms eine Schweißzange zum Punktschweißen - z.B. von Karosserieblechen etc. - tragen. Der Schweißstrom wird von Schweißtransformatoren mit an die im allgemeinen impedanzarmen Schweißzangen angepaßter Spannung zugeführt, d.h. die Schweißtransformatoren liefern ausgangsseitig bei vergleichsweise niedrigen Sekundärspannungen sehr hohe Ströme. Dabei sollten die Schweißtransformatoren in der Nähe der Schweißzangen angeordnet sein, d.h. mit dem Arbeitsarm des Roboters bewegt werden. Voraussetzung hierfür ist ein möglichst geringes Gewicht der Schweißtransformatoren, um zu verhindern, daß die Roboterarme aufgrund der Gewichtsbelastung sehr massiv und somit schwer ausgebildet werden müssen, und um so zu erreichen, daß die für die exakte Bewegung des Arbeitsarms erforderlichen Kräfte möglichst gering gehalten werden können.

Üblicherweise wird beim Widerstandsschweißen die vorhandene Netz-Wechselspannung mit einer Frequenz von 50 bzw. 60 Hz mittels einphasiger Transformatoren auf die erforderliche geringe Schweißspannung transformiert. Wenn hohe Schweißströme erforderlich sind bzw. leichte Schweißstromquellen gefordert werden, sind Netzfrequenz-Transformatoren ungeeignet, da aufgrund der niedrigen Frequenz relativ groß dimensionierte Transformatorkerne erforderlich sind. Es wurden deshalb sogenannte Mittelfrequenz-Schweißsysteme mit Betriebsfrequenzen von 300 Hz bis etwa 5 kHz entwickelt. Die höheren Frequenzen erlauben hier eine erhebliche Verkleinerung der Transformatorkerne und damit verbunden eine beträchtliche Gewichtsreduzierung. Bisher werden Mittelfrequenz-Transformatoren nahezu ausschließlich mit nachgeschaltetem Gleichrichter betrieben, um die mit der Frequenz steigenden induktiven Verluste in der Schweißzange zu kompensieren. Da solche Transformatoren in der Regel wassergekühlt sind, wählt man üblicherweise einen Scheibenspulen-Aufbau. Die Sekundärwicklungen sind dabei meist als Hohlprofil mit rechteckigem Querschnitt ausgebildet, in dessen Innerem das Kühlmedium geführt wird. Dagegen erfolgt die Kühlung der Primärwicklung indirekt, indem die Scheibenspulen mehrlagig aus Flachkupfer gewickelt und in räumlicher Nähe zur Sekundärspule angeordnet werden. Soweit in Einzelfällen auch bereits Mittelfrequenz-Schweißtransformatoren mit Zylinderwicklungen vorgeschlagen wurden (DE 25 49 327 A1), wurde versucht, die entstehende Verlustwärme durch Anströmung der Primär- und Sekundärwicklung mit einem in zwischen ihnen gebildeten Kühlkanälen geführten Kühlmedium abzuführen. Hinsichtlich der magnetischen Kopplung zwischen Primär- und Sekundärkreise und die Erzielung möglichst homogener Stromdichten in den Wicklungen wird bei dieser Ausgestaltung - ebenso wie bei Verwendung von Scheibenwicklungen - kein optimales Ergebnis erreicht, wobei insbesondere die höheren Betriebsfrequenzen zu hohem Verlust im Transformator und somit zu einer Reduzierung des Wirkungsgrads führen. Aus der GB-A- 0 790 721 ist ein Transformator bekannt, bei welchem die Windungen der Primärwicklung - ebenso wie die der Windungen der Sekundärwicklung - aus Lagen eines übereinander gewickelten elektrisch leitenden Bandmaterials bestehen, wobei allerdings nicht über die Ausgestaltung des zugehörigen Gehäuses und die Abfuhr der Verlustwärme derart offenbart ist, daß der verkapselte Transformator mit möglichst geringen Abmessungen und geringem Gewicht hergestellt werden kann.

Der Erfindung liegt demgegenüber die Aufgabe zugrunde, einen Transformator, insbesondere einen Schweißtransformator der für Betriebsfrequenzen von 300 Hz bis 5 KHz geeignet ist, mit nur so geringen Abmessungen und Gewicht herzustellen, daß er in unmittelbarer Nähe der Ausleger eines Industrieroboters vorgesehenen Schweißzange angeordnet werden kann.

Ausgehend von einem Transformator der eingangs erwähnten Art wird diese Aufgabe erfindungsgemäß dadurch gelöst, daß der Transformator in ein äußeres Gehäuse eingekapselt ist, dessen Innenraum der äußeren Form des Transformators weitgehend komplementär entsprechend ausgebildet und dessen Wandung mit Kanälen zur Durchströmung mit einem Kühlmedium versehen ist. Durch diese Ausgestaltung wird ein kompakter Aufbau des Transformators insgesamt erreicht, wobei durch Verzicht von auf die Anordnung von kühlmitteldurchströmten Kanälen im eigentlichen Transformator und die Abfuhr der Verlustwärme ausschließlich über das angepaßte Gehäuse der angestrebte kompakte Aufbau mit relativ geringem Gewicht erhalten wird.

In bevorzugter Ausgestaltung der Erfindung ist der Transformator als Einphasen-Manteltransformator mit einem Transformator-Kern mit drei voneinander beabstandeten parallelen und an beiden stirnseitigen Enden durch jeweils einen Steg verbundenen Schenkeln ausgebildet, wobei zweckmäßig auf dem mittleren Schenkel des Transformator-Kerns zunächst eine erste innere Primärwicklung, radial anschließend eine die radial innere Primärwicklung konzentrisch umgebende Sekundärwicklung und dann eine an die Sekundärwicklung radial anschließende konzentrische äußere zweite Primärwicklung vorgesehen ist.

Dabei können dann die sekundärseitigen Anschlüsse des Transformators in vorteilhafter Weise als integral an den Rändern der Windungs-Lagen der Sekundärwicklung angesetzte Streifen aus elektrisch leitendem metallischen Bandmaterial ausgebildet sein, die etwa rechtwinklig in einem Radius vom jeweils zugehörigen Rand und rechtwinklig zu der durch die drei Schenkel des Mantelkerns gelegte Mittelebene radial nach außen über die jeweils zugehörige Stirnseite der Transformator-Wicklungen umgebogen sind. Damit sind diese Anschlußelemente in ihrer Form weitgehend in Richtung der außerhalb des Kerns verlaufenden Feldlinien angeordnet.

Die sekundärseitigen Anschlüsse des Transformators können dabei jeweils zwei an gegenüberliegenden Rändern der Wicklungslagen der Sekundärwicklung angesetzte, etwa rechtwinklig vom jeweils zugehörigen Rand und rechtwinklig in einem Radius zu der durch die drei Schenkel des Mantelkerns gelegten Mittelebene radial nach außen über die jeweils zugehörige Stirnseite der Transformatorwicklungen umgebogene Streifen aus leitendem metallischen Bandmaterial aufweisen, wobei dann die wicklungsabgewandten freien Enden jedes an der gleichen Wicklungslage angeschlossenen Paares von Anschluß-Streifen dann zweckmäßig durch jeweils eine gemeinsame sich im wesentlichen parallel zum mittleren Schenkel des Transformator-Kerns über die Wicklungen erstreckende Anschluß-Platte aus elektrisch leitendem Material miteinander verbunden sind.

In bevorzugter Ausgestaltung der Erfindung weisen die Sekundärwicklungen insgesamt drei Anschlüsse bzw. Anschluß-Platten auf, die an der radial innersten, der radial äußersten und einer mittleren Windungs-Lage (Mittenabgriff) der Sekundärwicklung angeschlossen sind.

Die die an der radial innersten Windungs-Lage der Sekundärwicklung und die an der radial äußersten Windungs-Lage der Sekundärwicklung angeschlossene Anschluß-Streifen verbindenden Anschluß-Platten werden dann zweckmäßig seitlich zueinander versetzt in einer Ebene angeordnet, während die die an der mittleren Windungs-Lage angeschlossenen Anschluß-Streifen verbindende Anschluß-Platte in einer demgegenüber parallel versetzten Ebene angeordnet ist.

Dadurch wird es möglich, die für die Gleichrichtung des Sekundärstroms erforderliche Gleichrichterschaltung in den Transformator zu integrieren, indem auf den spulenabgewandten Flachseiten der der radial innersten Windungs-Lage der Sekundärwicklung und der radial äußersten Windungs-Lage der Sekundärwicklung zugeordneten Anschluß-Platte ein Anschlußkontakt jeweils wenigstens eines Halbleiter-Gleichrichterelements angeschlossen ist, deren jeweils andere elektrische Anschlüsse zu einem gemeinsamen elektrischen Anschluß der Sekundärwicklung zusammengeführt sind.

Wenn die Gleichrichterelemente als scheibenförmige Halbleiter-Dioden mit hoher Leistung mit jeweils an den gegenüberliegenden Flachseiten vorgesehenen Anschluß-Kontaktflächen ausgebildet sind, kann dann die Ausgestaltung so getroffen werden, daß die Halbleiter-Dioden jeweils mit einer Anschluß-Kontaktfläche auf der wicklungsabgewandten Fläche einer der parallelen Anschluß-Platten der Sekundärwicklung in elektrischem Kontakt stehen, während ihre jeweils andere Anschluß-Kontaktflächen mit der zugewandten Flachseite der parallel versetzten, den gemeinsamen Anschluß bildenden Kontaktplatte in elektrischem Kontakt stehen.

Zur möglichst widerstandsarmen Ausbildung der Kontakte sind die Halbleiter-Dioden zweckmäßig zwischen den elektrischen Anschluß-Platten und der gemeinsamen Anschluß-Kontaktplatte eingespannt, wobei hierfür zweckmäßig vorgespannte Federelemente Verwendung finden.

Zur Abfuhr der Verlustwärme empfiehlt es sich, den Transformator in ein Gehäuse einzukapseln, dessen Innenraum der äußeren Form des Transformators weitgehend komplementär entsprechend ausgebildet ist, und dessen Wandung mit Kanälen zur Durchströmung mit einem flüssigen oder gasförmigen Kühlmedium versehen ist.

Die Erfindung ist in der folgenden Beschreibung eines Ausführungsbeispiels in Verbindung mit der Zeichnung näher erläutert, und zwar zeigt:
- Fig. 1: das schematische Schaltbild eines Einphasen-Transformators mit sekundärseitig integrierter Gleichrichterschaltung;
- Fig. 2: eine perspektivische Ansicht eines Ausführungsbeispiels eines erfindungsgemäßen, als Einphasen-Manteltransformator ausgebildeten Schweißtransformators;
- Fig. 3: eine Vorderansicht auf den in Fig. 2 gezeigten Transformator; und
- Fig. 4: eine Ansicht des Transformators, gesehen in Richtung des Pfeils 4 in Fig. 3.

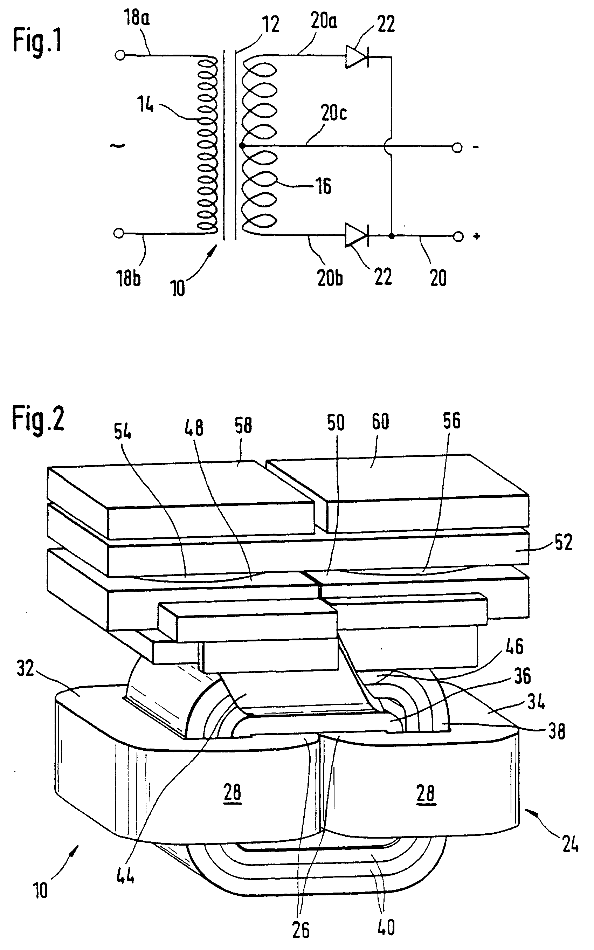

In Fig. 1 ist schematisch das Schaltbild eines Einphasen-Transformators 10 gezeigt, der als Schweißtransformator zur Umformung von Wechselströmen hoher Spannung mit Frequenzen zwischen etwa 300 Hz bis 5 kHz in Gleichstrom niedriger Spannung und hoher Stromstärke vorgesehen ist. Der Transformator 10 weist hierfür eine auf einem Transformator-Kern 12 vorgesehene Primärspule 14 hoher Windungszahl sowie eine Sekundärspule 15 geringer Windungszahl auf. Die Primärspule 14 ist über Anschlußleitungen 18a, 18b an eine Wechselstrom hoher Spannung und im angegebenen Frequenzbereich zur Verfügung stellenden elektrischen Spannungsquelle anschließbar. Die Sekundärspule 16 weist einen sogenannten Mittenabgriff auf, d.h. neben den an den äußeren Enden der Spulenwindungen angeschlossenen Ahschlußleitungen 20a, 20b ist an der Mittelwindung der Sekundärspule eine dritte Anschlußleitung 20c angeschlossen. In die sekundärseitigen Anschlußleitungen 20a und 20b sind Gleichrichterelemente 22 eingeschaltet, welche jeweils Halbwellen des in der Sekundärspule 16 induzierten Wechselstroms durchlassen. Hinter den Dioden 22 sind die Anschlußleitungen 20a, 20b zu einer gemeinsamen Anschlußleitung 20 elektrisch verbunden. Der in der Primärspule 14 eingespeiste Wechselstrom wird somit zu einem an der Anschlußleitung 20 und der Anschlußleitung 20c abnehmbaren, entsprechend dem Verhältnis der Zahl der Windungslagen der Primär- und der Sekundärspule in der Spannung verringerten Gleichstrom hoher Stromstärke transformiert.

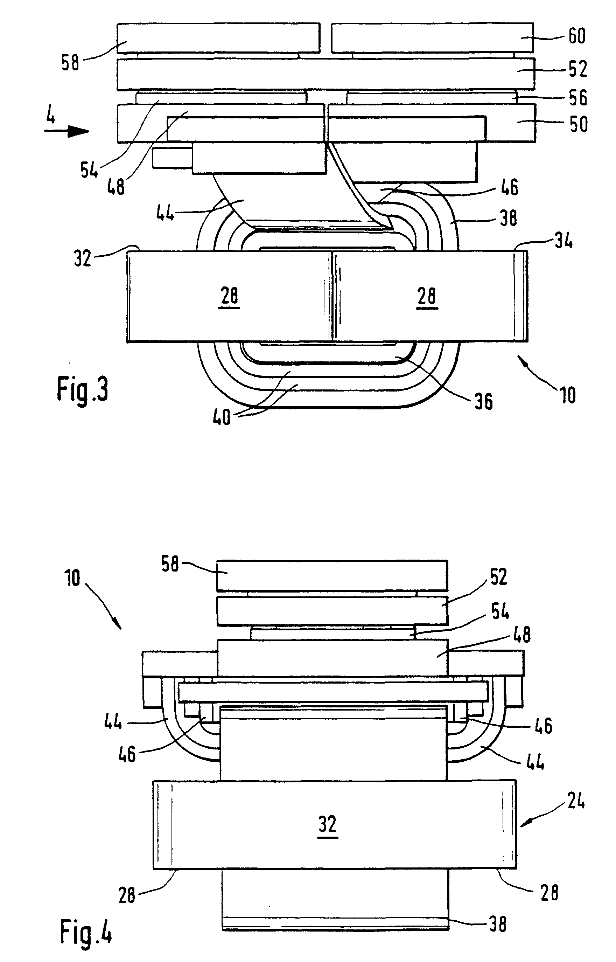

In den Figuren 2 bis 4 ist der innere Aufbau eines Ausführungsbeispiels eines solchen als Einphasen-Manteltransformator mit integrierter Gleichrichterfunktion für den sekundärseitigen Strom ausgebildeten Schweißtransformators 10 ohne Gehäuse gezeigt. Auf dem mittleren Schenkel eines aus drei in parallelem Abstand angeordneten und an den gegenüberliegenden Stirnseiten durch Joche oder Stege integral verbundenen Kern-Schenkeln gebildeten Transformator-Kern sind die Primär- und die Sekundärwicklungen 14 bzw. 16 in Form von Zylinder- oder Röhrenwicklungen aufgebracht, die jeweils aus Wicklungs-Lagen von spiralförmig übereinander gewickelten streifenförmigen Kupferbändern gebildet werden, deren Breite im wesentlichen gleich bzw. nur geringfügig kleiner als die Länge des die Wicklungen durchsetzenden Schenkels des Transformator-Kerns ist. Der in den Figuren 2 bis 4 insgesamt mit 24 bezeichnete Transformator-Kern kann in üblicher Weise aus gegeneinander isolierten Blechstreifen aufgebaut sein, wobei der die Wicklungen tragende mittlere Schenkel in den Figuren mit 26 und die beiden äußeren über Joche 28 mit dem mittleren Schenkel 26 verbundenen Schenkel mit 32 und 34 bezeichnet sind. Die im schematischen Schaltbild in Fig. 1 mit 14 bezeichnete Primärwicklung ist in zwei Teilwicklungen, nämlich eine erste innere Primärwicklung 36 und eine zweite äußere Primärwicklung 38 unterteilt. Die einzelnen Windungs-Lagen aus Bandmaterial sind in den Zeichnungsfiguren nicht dargestellt. Zwischen der radial inneren und der radial äußeren Primärwicklung 36 bzw. 38 ist die nur wenige Windungs-Lagen aus dickerem Bandmaterial umfassende Sekundärwicklung 40 angeordnet.

Die elektrischen Anschlüsse an den beiden Endwindungen der Sekundärwicklung 40 erfolgen über an den stirnflächenseitigen Rändern der jeweiligen äußeren Windung des Bandmaterials der Sekundärspule angesetzte elektrische Anschlüsse, und zwar so, daß an jeder der beiden Stirnflächen der anzuschließenden Windungs-Lage jeweils ein Streifen, d.h. insgesamt zwei Streifen-Paare 44 bzw. 46 aus elektrisch leitendem Bandmaterial angesetzt ist, welche über einen bogenförmigen Übergangsbereich jeweils in eine etwa rechtwinklig zum zugehörigen Rand und rechtwinklig zur der durch die drei Schenkel 32, 26 und 34 des Transformator-Kerns 24 gelegten Mittelebene nach außen über die jeweils zugehörigen Stirnseiten der Transformator-Wicklungen 36, 38 und 40 verlaufende Lage umgebogen sind. Die wicklungsabgewandten freien Enden jedes an der gleichen Wicklungslage angeschlossenen Paars 44 bzw. 46 von Anschluß-Streifen sind dann durch jeweils eine gemeinsame sich im wesentlichen parallel zum mittleren Schenkel 26 des Transformator-Kerns 24 über die Wicklungen 35, 38 und 40 erstreckende Anschluß-Platte 43 bzw. 50 miteinander verbunden. Diese Anschluß-Platten 48 bzw. 50 liegen seitlich zueinander versetzt in der gleichen Ebene. Die Sekundärwicklung 40 weist außerdem noch einen in gleicher Weise ausgebildeten Mittenanschluß auf, in dem von gegenüberliegenden Rändern der mittleren Windung der Sekundärspule 40 jeweils ein (nicht gezeigter) in gleicher Weise umgebogener Anschluß-Streifen vorgesehen ist, an dessen wicklungsabgewandten äußeren Enden eine in geringem Abstand parallel oberhalb der Anschluß-Platte 48 bzw. 50 vorgesehene Anschluß-Platte 52 angeschlossen ist, welche sich in parallelem Abstand über die Anschluß-Platten 48 und 50 erstreckt. Jeweils im Zwischenraum zwischen der Oberseite der Anschluß-Platte 48 bzw. 50 und der dieser zugewandten Unterseite der Anschluß-Platte 52 ist jeweils wenigstens eine scheibenförmige Halbleiter-Diode 54 bzw. 56 angeordnet, deren als Anschlüsse ausgebildeten gegenüberliegenden Flachseiten zwischen den Anschluß-Platten 48, 52 bzw. 50, 52 eingespannt sind. Die scheibenförmigen Halbleiter-Dioden 54, 56 dienen als Gleichrichterelemente hinreichend hoher Leistung, die also mit einer Kontaktfläche an der gemeinsamen Anschluß-Platte 52 und mit der anderen Kontaktfläche an der jeweils zugeordneten Anschluß-Platte 48 bzw. 50 in elektrisch leitender Anlage stehen. Durch federnde Einspannung der Halbleiter-Dioden 54, 46 zwischen der Anschluß-Platte 52 und den jeweils zugeordneten Anschluß-Platten 48 bzw. 50 wird sichergestellt, daß sich auch bei Dehnungen der Transformator-Bauteile - beispielsweise infolge von Erwärmung - der elektrische Kontakt zwischen den Anschluß-Platten und den Kontaktflächen der Dioden nicht verschlechtert. Die aufzubringende Vorspannkraft kann beispielsweise durch (nicht leitende) elastische Federelemente 58, 60 erzeugt werden, welche zwischen der diodenabgewandten Oberseite der Anschluß-Platte 52 und dem - in den Zeichnungsfiguren nicht gezeigten - Gehäuse des Transformators vorgespannt angeordnet sind.

Das - wie erwähnt - in den Zeichnungsfiguren nicht dargestellte den eigentlichen Transformator einkapselnde Gehäuse wird zweckmäßig so ausgebildet, daß sein Innenraum der äußeren Form der beschriebenen Bauteile des Transformators weitgehend komplementär entsprechend ausgebildet ist, wobei dann die Gehäuse-Wandungen mit Kanälen zur Durchströmung mit einem gasförmigen oder flüssigen Kühlmedium versehen sind.

Es ist ersichtlich, daß im Rahmen des Erfindungsgedankens Abwandlungen oder Weiterbildungen des beschriebenen Ausführungsbeispiels verwirklichbar sind, wobei wesentlich ist, daß die Primär- und die Sekundärwicklung als Zylinder- bzw. Röhren-Wicklungen aus metallischem Bandmaterial ausgebildet sind und zumindest die sekundärseitigen Anschlußleitungen an den stirnflächenseitigen Rändern der Windungen des Bandmaterials der Sekundärspule angeschlossen und so geführt sind, daß sie in ihrer Form weitgehend der Richtung der außerhalb des Transformator-Kerns verlaufenden Feldlinien folgen. Durch den Aufbau der Spulenwicklungen aus in der Primärwicklung dünnen Kupferbandlagen in der Sekundärwicklung wenigen Windungen aus relativ starkem Band- bzw. Blechmaterial wird der Strom annähernd in Ebenen geführt, welche durch Punkte gleicher magnetischer Feldstärke außerhalb des Transformator-Kerns gebildet werden. Dadurch werden die bei hochfrequenten Wechselströmen beobachteten Effekte der Widerstandserhöhung durch inhomogene Stromverteilung verringert, so daß der so ausgebildete Schweißtransformator Leistungserhöhungen bei Verringerung des Gewichts und verringerten Abmessungen ermöglicht.

## Patentansprüche

1. Gehäuse mit Transformator (10) hoher Leistung bei mittleren Frequenzen, insbesondere zur Verwendung als Schweißtransformator für die Widerstandsschweißung mit jeweils wenigstens einer von einem Schenkel eines Transformator-Kerns (12) durchsetzten Primärwicklung (14; 36 38) und einer Sekundärwicklung (16; 40), die als konzentrisch übereinander liegende Zylinderwicklungen ausgebildet sind, wobei
die Windungen der Primärwicklung(en) (14; 36; 38) von einer Vielzahl von spiralartig übereinander gewickelten Lagen eines elektrisch leitenden metallischen Bandmaterials relativ geringer Dicke und die Windungen der Sekundärwicklung (16; 40) von einer dem gewünschten Untersetzungsverhältnis von Primär- zu Sekundärspannung entsprechend gewählten geringeren Anzahl von Lagen eines übereinander gewickelten elektrisch leitenden metallischen Bandmaterials größerer Dicke gebildet sind, wobei die rechtwinklig zur Längsrichtung gemessene Breite der Wicklungs-Lagen der Bandmaterialien im wesentlichen gleich oder nur geringfügig kleiner als die Länge des die Wicklung durchsetzenden Schenkels (26) des Transformator-Kerns (12; 24) ist, wobei
sekundärseitigen Anschlußleitungen (20a, 20b, 20c; 44, 46) an den stirnflächenseitigen Rändern der Windungen des Bandmaterials der Sekundärspule (16; 40) angeschlossen sind, und wobei
der Transformator eingekapselt ist in das äußere Gehäuse, dessen Innenraum der äußeren Form des Transformators (10) weitgehend komplementär entsprechend ausgebildet und dessen Wandung mit Kanälen zur Durchströmung mit einem Kühlmedium versehen ist.

2. Einphasen-Manteltransformator mit einem Transformator-Kern mit drei voneinander beabstandeten parallelen und an beiden stirnseitigen Enden durch jeweils einen Steg verbundenen Schenkeln nach Anspruch 1, dadurch gekennzeichnet, daß auf dem mittleren Schenkel (26) des Transformator-Kerns (24) zunächst eine erste innere Primärwicklung (36), radial anschließend eine die radiale innere Primärwicklung (36) konzentrisch umgebende Sekundärwicklung (40) und dann eine an die Senkundärwicklung (40) radial anschließende, konzentrische äußere zweite Primärwicklung (38) vorgesehen ist.

3. Transformator nach Anspruch 2, dadurch gekennzeichnet, daß die sekundärseitigen Anschlüsse des Transformators (10) als integral an den Rändern der Windungs-Lagen der Sekundärwicklung (40) angesetzte Streifen (44, 46) aus elektrisch leitendem metallischen Bandmaterial ausgebildet sind, die etwa rechtwinklig in einem Radius vom jeweiligen zugehörigen Rand und rechtwinklig zu der durch die drei Schenkel (32; 26, 34) des Mantelkerns gelegte Mittelebene radial nach außen über die jeweils zugehörige Stirnseite der Transformator-Wicklungen (36, 38, 40) umgebogen sind.

4. Transformator nach Anspruch 3, dadurch gekennzeichnet, daß die sekundärseitigen Anschlüsse des Transformators (10) jeweils zwei an gegenüberliegenden Rändern der Wicklungs-Lagen der Sekundärwicklung (40) angesetzte, etwa rechtwinklig vom jeweiligen zugehörigen Rand und rechtwinklig in einem Radius zu der durch die drei Schenkel (32, 25, 34) des Transformator-Kerns (24) gelegte Mittelebene radial nach außen über die jeweils zugehörige Stirnseite der Transformatorwicklungen umgebogene Streifen (44, 46) aus leitendem metallischem Bandmaterial aufweisen, und daß die wicklungsabgewandten freien Enden jedes an der gleichen WicklungsLage angeschlossenen Paares von Anschluß-Streifen (44, 46) durch jeweils eine gemeinsame, sich im wesentlichen parallel zum mittleren Schenkel (26) des Transformator-Kerns (24) über die Wicklungen erstreckende Anschluß-Platte (48, 50) aus elektrisch leitendem Material miteinander verbunden sind.

5. Transformator nach Anspruch 3 oder 4, dadurch gekennzeichnet, daß die Sekundärwicklung (40) insgesamt drei Anschlüsse bzw. Anschluß-Platten (48; 50; 52) aufweist, die an der radial innersten, der radial äußersten und einer mittleren Windungs-Lage der Sekundärwicklung (40) angeschlossen sind.

6. Transformator nach Anspruch 4 und 5, dadurch gekennzeichnet, daß die die an der radial innersten Windungslage der Sekundärwicklung (40) und die an der radial äußersten Windungslage der Sekundärwicklung (40) angeschlossenen Anschluß-Streifen (44, 46) verbindenden Anschluß-Platten (48; 50) seitlich zueinander versetzt in einer Ebene angeordnet sind, während die die an der mittleren Windungs-Lage angeschlossenen Anschluß-Streifen verbindende Anschluß-Platte (52) in einer demgegenüber parallel versetzten Ebene angeordnet ist.

7. Transformator nach Anspruch 6, dadurch gekennzeichnet, daß auf den spulenabgewandten Flachseiten der der radial innersten Windungs-Lage der Sekundärwicklung und der der radial äußersten Windungs-Lage der Sekundärwicklung zugeordneten Anschluß-Platte (48, 50) ein Anschlußkontakt jeweils wenigstens eines Halbleiter-Gleichrichterelements angeschlossen ist, deren jeweils andere elektrische Anschlüsse zu einem gemeinsamen elektrischen Anschluß (Anschluß-Platte 52) der Sekundärwicklung (40) zusammengeführt sind.

8. Transformator nach Anspruch 7, dadurch gekennzeichnet, daß die Gleichrichterelemente als scheibenförmige Halbleiter-Dioden (54, 56) hoher Leistung mit jeweils an den gegenüberliegenden Flachseiten vorgesehenen Anschluß-Kontaktfläche ausgebildet sind, und daß die Halbleiter-Dioden (54; 56) jeweils mit einer Anschluß-Kontaktfläche auf der wicklungsabgewandten Fläche einer der parallelen Anschluß-Platte (48, 50) der Sekundärwicklung (40) in elektrischem Kontakt stehen, während ihre jeweils andere Anschluß-Kontaktfläche mit der zugewandten Flachseite einer den gemeinsamen Anschluß bildenden Anschluß-Platte (52) in elektrischem Kontakt steht.

9. Transformator nach Anspruch 8, dadurch gekennzeichnet, daß die Halbleiter-Dioden (54, 56) zwischen den parallelen elektrischen Anschluß-Platten (48, 50) und der gemeinsamen Anschluß-Platte (52) eingespannt sind.

10. Transformator nach Anspruch 9, dadurch gekennzeichnet, daß die parallelen Anschluß-Platten (48, 50) und die gemeinsame Anschluß-Platte (52) durch vorgespannte Federelemente (58, 60) an die jeweils gegenüberliegenden Kontaktflächen der Halbleiter-Dioden (54, 56) gespannt sind.

## Claims

1. Housing with high-powered transformer at medium frequencies, particularly for use as a welding transformer for resistance welding with in each case at least one primary winding (14; 36, 38), which has one leg of a transformer core (12) passing through it, and a secondary winding (16; 40), these windings being constructed as cylindrical windings which lie concentrically one above another,
wherein the turns of the primary winding(s) (14; 36; 38) are formed by a plurality of layers of an electrically conductive metal band material of relatively small thickness which are wound in a spiral one above another and the turns of the secondary winding (16; 40) are formed by a smaller number of layers of an electrically conductive metal band material of relatively great thickness which are wound in a spiral one above another, this smaller number being chosen in accordance with the desired reduction ratio from primary to secondary voltage, and the width of the winding layers of the band materials measured at right angles to the longitudinal direction is substantially equal to or only slightly less than the length of the leg (26) of the transformer core (12; 24) which passes through the winding,
wherein connecting leads (20a, 20b, 20c; 44, 46) on the secondary side are connected to the end edges of the turns of the band material of the secondary coil (16; 40),
and wherein the transformer is encapsulated in the housing, the interior of which is constructed so as to be largely complementary to the external shape of the transformer (10), the wall of the said housing being provided with channels for a cooling medium to flow through.

2. Single-phase shell-type transformer with a transformer core with three legs which are parallel and spaced from one another and are each connected at both ends by a web, according to Claim 1, characterised in that first of all a first inner primary winding (36) is provided, adjoined radially by a secondary winding (40) which concentrically surrounds the radial inner primary winding (36) and then a concentric outer second primary winding (38) radially adjoining the secondary winding (40).

3. Transformer as claimed in Claim 2, characterised in that the connections of the transformer (10) on the secondary side are constructed as strips (44, 46) of electrically conductive metal band material which are placed integrally on the edges of the layers of turns of the secondary winding (40), these strips being bent radially outwards over the respective appertaining end of the transformer windings (36, 38, 40) approximately at right angles in a radius from the respective appertaining edge and at right angles to the central plane running through the three legs (32; 26, 34) of the shell core.

4. Transformer as claimed in Claim 3, characterised in that the connections of the transformer (10) each have two strips (44, 46) of conductive metal band material which are placed on opposing edges of the layers of turns of the secondary winding (40) and are bent radially outwards over the respective appertaining end of the transformer windings approximately at right angles from the respective appertaining edge and at right angles in a radius to the central plane running through the three legs (32; 26, 34) of the shell core, and that the free ends of each pair of connection strips (44, 46) remote from the winding are each connected to one another by a common connection plate (48, 50) made from electrically conductive material which is substantially parallel to the central leg (26) of the transformer core (24) extending over the windings.

5. Transformer as claimed in Claim 3 or 4, characterised in that the secondary winding (40) has a total of three connections or connection plates (48; 50; 52) which are connected to the radially innermost, the radially outermost and a central layer of turns of the secondary winding (40).

6. Transformer as claimed in Claim 4 and 5, characterised in that the connection plates (48; 50) which connect the connection strips (44, 46) connected to the radially innermost layer of turns of the secondary winding (40) and the radially outermost layer of windings of the secondary winding (40) are disposed in a plane so as to be offset laterally with respect to one another, whilst the connection plate (52) which connects the connection strips connected to the central layer of turns is disposed in a plane which is offset parallel thereto.

7. Transformer as claimed in Claim 6, characterised in that a connection contact of in each case at least one semiconductor rectifier element is connected on the flat sides, remote from the coil, of the connection plate (48, 50) associated with the radially innermost layer of turns of the secondary winding and the radially outermost layer of turns of the secondary winding, the respective other electrical connections of the semiconductor rectifier element being brought together to a common electrical connection (connection plate 52) of the secondary winding (40).

8. Transformer as claimed in Claim 7, characterised in that the rectifier elements are constructed as high-powered disc-shaped semiconductor diodes (54, 56) each having a connection contact surface provided on the opposing flat sides, and that the semiconductor diodes (54, 56) are each in electrical contact with a connection contact surface, remote from the winding, on the surface of one of the parallel connection plates (48, 50) of the secondary winding (40), whilst the respective other connection contact surface thereof is in electrical contact with the facing flat side of a connection plate (52) which forms the common connection.

9. Transformer as claimed in Claim 8, characterised in that the semiconductor diodes (54, 56) are gripped between the parallel electrical connection plates (48, 50) and the common connection plate (52).

10. Transformer as claimed in Claim 9, characterised in that the parallel connection plates (48, 50) and the common connection plate (52) are held on the respective opposite contact surfaces of the semiconductor diodes (54, 56) by pretensioned spring elements (58, 60).

## Revendications

1. Enveloppe avec transformateur (10) de grande puissance à fréquences moyennes, en particulier destiné à être utilisé comme transformateur de soudage pour le soudage par résistance, comportant au moins un enroulement primaire (14 ; 36, 38) traversé par une branche d'un noyau de transformateur (12) et au moins un enroulement secondaire (16 ; 40) qui sont des enroulements cylindriques placés concentriquement les uns par-dessus les autres, les spires de l'enroulement primaire ou des enroulements primaires (14 ; 36, 38) étant formées d'un grand nombre de couches enroulées en spirale les unes par-dessus les autres d'une matière en bande métallique conductrice de relativement faible épaisseur, et les spires de l'enroulement secondaire (16 ; 40) étant formées d'un nombre plus petit, choisi d'après le rapport de transformation désiré de la tension primaire à la tension secondaire, de couches d'une matière en bande métallique conductrice de plus grande épaisseur enroulée sur elle-même, la largeur des couches d'enroulement des matières en bande mesurée perpendiculairement à la direction longitudinale, étant sensiblement égale ou seulement légèrement inférieure à la longueur de la branche (26) du noyau de transformateur (12 ; 24) traversant l'enroulement, les lignes de connexion côté secondaire (20a, 20b, 20c ; 44, 46) étant connectées aux bords côté surface frontale des spires de la matière en bande de la bobine secondaire (16 ; 40), et le transformateur étant enfermé dans l'enveloppe extérieure, dont l'intérieur est de forme dans une large mesure complémentaire de la forme extérieure du transformateur (10) et la paroi est pourvue de canaux destinés à être parcourus par un fluide de refroidissement.

2. Transformateur cuirassé monophasé comportant un noyau ayant trois branches parallèles espacées et reliées à chacune de leurs deux extrémités frontales par une entretoise, selon la revendication 1, caractérisé par le fait que, sur la branche du milieu (26) du noyau (24) du transformateur, sont prévus d'abord un premier enroulement primaire intérieur (36), contigu radialement, un enroulement secondaire (40) entourant concentriquement l'enroulement primaire intérieur radial (36), et ensuite un deuxième enroulement primaire extérieur concentrique (38) contigu radialement à l'enroulement secondaire (40).

3. Transformateur selon la revendication 2, caractérisé par le fait que les connexions côté secondaire du transformateur (10) sont constituées de rubans (44, 46) de matière en bande métallique conductrice faits sur les bords des couches d'enroulement de l'enroulement secondaire (40) et qui sont recourbés à peu près à angle droit en un rayon à partir du bord correspondant et à angle droit du plan médian traversant les trois branches (32, 26, 34) du noyau cuirasse, radialement vers l'extérieur au-dessus du côté frontal correspondant des enroulements (36, 38, 40) du transformateur.

4. Transformateur selon la revendication 3, caractérisé par le fait que les connexions côté secondaire du transformateur (10) présentent deux rubans (44, 46) de matière en bande métallique conductrice placés sur des bords opposés des couches d'enroulement de l'enroulement secondaire (40) et recourbés à peu près à angle droit à partir du bord correspondant et à angle droit, en un rayon, du plan médian traversant les trois branches (32, 26, 34) du noyau (24) du transformateur, radialement vers l'extérieur au-dessus du côté frontal correspondant des enroulements du transformateur, et que les extrémités libres opposées à l'enroulement de chaque paire de rubans de connexion (44, 46) connectée à la même couche d'enroulement sont reliées entre elles par une plaque commune de connexion (48, 50) en matière conductrice s'étendant au-dessus des enroulements sensiblement parallèlement à la branche du milieu (26) du noyau (24) du transformateur.

5. Transformateur selon l'une des revendications 3 et 4, caractérisé par le fait que l'enroulement secondaire (40) présente au total trois connexions ou plaques de connexion (48, 50, 52) qui sont connectées à la couche d'enroulement la plus intérieure radialement, la couche d'enroulement la plus extérieure radialement et une couche d'enroulement du milieu de l'enroulement secondaire (40).

6. Transformateur selon les revendications 4 et 5, caractérisé par le fait que les plaques de connexion (48, 50) qui relient les rubans de connexion (44) connectés à la couche d'enroulement la plus intérieure radialement de l'enroulement secondaire (40) et les rubans de connexion (46) connectés à la couche d'enroulement la plus extérieure radialement de l'enroulement secondaire (40) sont placées décalées latéralement l'une de l'autre dans un plan, tandis que la plaque de connexion (52) qui relie les rubans de connexion connectés à la couche d'enroulement du milieu est placée dans un plan décalé parallèlement du précédent.

7. Transformateur selon la revendication 6, caractérisé par le fait que sur les côtés plats opposés à la bobine de la plaque de connexion (48) associée à la couche d'enroulement la plus intérieure radialement de l'enroulement secondaire et de la plaque de connexion (50) associée à la couche d'enroulement la plus extérieure radialement de l'enroulement secondaire, est connecté un contact de connexion d'au moins un élément redresseur à semi-conducteur dont les autres connexions sont réunies en une connexion commune (plaque de connexion 52) de l'enroulement secondaire (40).

8. Transformateur selon la revendication 7, caractérisé par le fait que les éléments redresseurs sont constitués de diodes à semi-conducteur en forme de disque (54, 56) de grande puissance à surface de contact de connexion prévue sur les côtés plats opposés, et que les diodes à semi-conducteur (54, 56) sont chacune en contact électrique avec une surface de contact de connexion sur la surface opposée à l'enroulement d'une des plaques de connexion parallèles (48, 50) de l'enroulement secondaire (40), tandis que leur autre surface de contact de connexion est en contact électrique avec le côté plat en regard d'une plaque de connexion (52) formant la connexion commune.

9. Transformateur selon la revendication 8, caractérisé par le fait que les diodes à semi-conducteur (54, 56) sont serrées entre les plaques de connexion parallèles (48, 50) et la plaque de connexion commune (52).

10. Transformateur selon la revendication 9, caractérisé par le fait que les plaques de connexion parallèles (48, 50) et la plaque de connexion commune (52) sont serrées par des éléments élastiques précontraints (58, 60) contre les surfaces de contact opposées des diodes à semi-conducteur (54, 56).
